(19) **Europäisches Patentamt European Patent Office Office européen des brevets**

(11) **EP 4 667 550 A1**

(12) **EUROPEAN PATENT APPLICATION**
published in accordance with Art. 153(4) EPC

(43) Date of publication:
**24.12.2025 Bulletin 2025/52**

(21) Application number: **24921261.4**

(22) Date of filing: **31.05.2024**

(51) International Patent Classification (IPC):
**C09K 8/68** (2006.01)

(52) Cooperative Patent Classification (CPC):
**C09K 8/60; C09K 8/68; C09K 8/88**

(86) International application number:
**PCT/CN2024/096725**

(87) International publication number:
**WO 2025/161223 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2024 CN 202410153876**

(71) Applicants:
- **China Petroleum & Chemical Corporation Beijing 100728 (CN)**
- **Sinopec Southwest Oil & Gas Company Chengdu, Sichuan 610041 (CN)**

(72) Inventors:
- **GUO, Tonglou Chengdu, Sichuan 610041 (CN)**
- **LEI, Wei Chengdu, Sichuan 610041 (CN)**
- **GU, Zhanyu Chengdu, Sichuan 610041 (CN)**
- **LAN, Lin Chengdu, Sichuan 610041 (CN)**
- **PAN, Baofeng Chengdu, Sichuan 610041 (CN)**
- **TAN, Jia Chengdu, Sichuan 610041 (CN)**

(74) Representative: **Hoffmann Eitle Patent- und Rechtsanwälte PartmbB Arabellastraße 30 81925 München (DE)**

(54) **DEGRADABLE NANOMATERIAL AND PREPARATION METHOD THEREFOR AND USE THEREOF, AND FRACTURING FLUID**

(57) A degradable nanomaterial and a preparation method therefor and use thereof, and a fracturing fluid. The molecular aggregate hydrodynamic particle size $D_{10}$ of the degradable nanomaterial in a liquid polyethylene glycol having a molecular weight of 380-430 is less than $30\mu m$, $D_{50}$ is equal to $50-120\mu m$, and $D_{90}$ is equal to $150-250\mu m$. The preparation method for the degradable nanomaterial comprises: subjecting a nanomicrosphere lactide raw material to hydroxylation treatment and activation treatment, then mixing and bringing same into contact with a fluorocarbon-chain-containing surfactant. The degradable nanomaterial has excellent degradation proformance at relativey low temperatures, which satisfies low temperature construction requirements, and can effectively block pores having various sizes when used in a fracturing fluid system.

FIG. 2

**Description**

**CROSS-REFERENCE TO RELATED APPLICATIONS**

The application claims the benefit of the China patent application No. "202410153876.3", filed on February 2, 2024, the content of which is specifically and entirely incorporated herein by reference.

**TECHNICAL FIELD**

The present invention relates to petrochemical technologies, in particular to a degradable nanomaterial and a preparation method therefor and a use thereof, and a fracturing fluid containing the degradable nanomaterial.

**BACKGROUND ART**

The low-permeability tight sandstone oil and gas reservoir formations typically have porosity less than 10% and permeability less than 0.1 millidarcy, the natural productivity from a single well is low, and the production requires a fracturing operation. However, the fracturing fluids may cause extensive filtration loss and permeation into the formation during the fracturing process, resulting in the liquid phase damages (e.g., water sensitivity and water blocking) and the solid phase damages (e.g., residue adsorption and retention), with reservoir matrix damage rates exceeding 30%. The oil production enterprises in China and foreign countries typically reduce damaged to the reservoirs by adding plugging agents, water-resistant blocking agents and other additives into the fracturing fluid.

The plugging agents for fracturing currently used in the oil fields mainly comprise three categories, namely water-soluble plugging agents, acid-soluble plugging agents and oil-soluble plugging agents. The acid-soluble plugging agents are mainly $CaCO_3$-based products, which can only be used for bridging and plugging at pore throats or fractures, and the dissolution of said acid-soluble plugging agents following the plugging process requires high concentration of acid solution and the subsequent flowing back; the oil-soluble plugging agents are mainly plugging agents which are soluble in oils, but the oil fields are mostly in high water-bearing development stage, it is difficult to flow back the oil-soluble plugging agents after completion of the fracturing process, and the formation is polluted; the water-soluble plugging agents have the defects such as too fast dissolution in an effective time, incomplete dissolution, and serious adhesion problem. Therefore, the new types of degradable plugging agents are the focus of the oilfield chemical research and development, wherein the macromolecular degradable materials (e.g., poly-cyclic-diester, copolymers of cyclic diester and other monomers) are used in the production of various plugging agents or fracturing diverting agents.

Although the materials (e.g., poly-cyclic-diester, copolymers of cyclic diester and other monomers) are degradable, the temperature required for degradation is high, and the degradation rate is low. The degradation properties of the materials cannot meet the requirements of degradation and flowing back after the fracturing and plugging process under the low temperature operation conditions (60-90°C). Furthermore, the existing materials (e.g., poly-cyclic-diester, copolymers of cyclic diester and other monomers) can only play the role of plugging the pores of the micrometer scale, and cannot effectively plug the pores of the nanometer scale formed in the low-permeability tight sandstone oil and gas reservoir formations.

**SUMMARY OF THE INVENTION**

The present invention aims to overcome the defects in the prior art, and provides a degradable nanomaterial and a preparation method therefor and a use thereof, and a fracturing fluid, the degradable nanomaterial has excellent degradation property at lower temperature, meets the requirements of low temperature operation, and can effectively plug pores of various dimensions when applied in a fracturing fluid system.

In order to achieve the above objects, the first aspect of the present invention provides a degradable nanomaterial, The molecular aggregate hydrodynamic particle size $D_{10}$ of the degradable nanomaterial in a liquid polyethylene glycol having a molecular weight of 380-430 is less than $30\mu m$, $D_{50}$ is equal to $50-120\mu m$, and $D_{90}$ is equal to $150-250\mu m$.

The second aspect of the present invention provides a preparation method for the degradable nanomaterial, the method comprises the following steps: subjecting a nano-microsphere cyclic diester raw material to hydroxylation treatment and activation treatment, then mixing and contacting with a fluorine-containing carbon chain surfactant.

The third aspect of the present invention provides a degradable nanomaterial composition, the composition comprises a solvent and the aforementioned degradable nanomaterial or the degradable nanomaterial prepared with the aforementioned method.

The fourth aspect of the present invention provides an use of the aforementioned degradable nanomaterial, the degradable nanomaterial prepared with the aforementioned method, or the aforementioned degradable nanomaterial composition in an oil and natural gas reservoir reformation working fluid, preferably the use as a plugging agent of the fracturing fluid.

The fifth aspect of the present invention provides a fracturing fluid comprising the aforementioned degradable nanomaterial composition.

Due to the technical scheme, the present invention produce the favorable effects as follows: the present invention provides a degradable nanomaterial which is based upon a specific molecular aggregate hydrodynamic particle size in liquid polyethylene glycol, when the degradable nanomaterial is used in a fracturing fluid system, by virtue of the nanoscale dimensions of the degradable material per se, the degradable nanomaterial can achieve multi-scale plugging of pores with different dimensions in a reservoir, it has a high plugging rate for fractures and pore throats having different dimensions, and a high matching degree with fractures and pore throats in the tight sandstone reservoirs, can meet the technical requirements for fracturing and modifying more low-permeability tight oil and gas reservoirs, and effectively reduce filtration loss from the working fluid; and the degradable nanomaterial has a high degradation rate at a lower temperature (60-90°C), can effectively reduce the residual content of the plugging agent, decrease damages to the reservoir matrix, enables a high flow back efficiency without the aid of a discharge aiding agent, promotes rapid flow of working fluid and flow back out of the reservoir, and increases the flow back efficiency of said working fluid.

## BRIEF DESCRIPTION OF THE DRAWINGS

FIG. 1 illustrates a characterization diagram of a microscope structure of cyclic diester particles in a reaction liquid before purification in Example 1;
FIG. 2 illustrates an infrared spectrum of the modified nanometer cyclic diester material after purification in Example 1.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a degradable nanomaterial, the molecular aggregate hydrodynamic particle size $D_{10}$ of the degradable nanomaterial in a liquid polyethylene glycol having a molecular weight of 380-430 is less than $30\mu m$, $D_{50}$ is equal to $50\text{-}120\mu m$, and $D_{90}$ is equal to $150\text{-}250\mu m$.

The present inventors have surprisingly discovered in the research and development process that chemically modifying the degradable nanoparticle raw material to form a degradable nanomaterial, which has a specific molecular aggregate hydrodynamic particle size in liquid polyethylene glycol, the degradable nanomaterial not only retains its own superior degradation properties, and during its use in the fracturing fluid system, it can achieve multiscale plugging of fractures and pore throats with different dimensions in the reservoirs, and has a high matching degree with the fractures and pore throats in the tight sandstone reservoirs, can meet the technical requirements for fracturing and modifying more low-permeability tight oil and gas reservoirs, and effectively reduce filtration loss from the working fluid, and can decrease damages to reservoir matrix, can achieve a high flow back efficiency after operations without the aid of a discharge aiding agent, can promote rapid flow of working fluid and flow back out of the reservoir, and increase the flow back efficiency of said working fluid.

In the present invention, the molecular aggregate hydrodynamic particle size refers to the apparent particle size of the molecular aggregate formed by aggregating degradable nanomaterial in liquid polyethylene glycol having a molecular weight of 380-430, the testing method is as follows: mixing the degradable nanomaterial with liquid polyethylene glycol having a molecular weight of 380-430 according a weight ratio of 1: (1-3), performing a wet method testing by using a Fritsch 22 type laser particle size analyzer according to the "liquid medium dispersion and measurement method" in the China National Standard GB/T19077-2016 "Particle size analysis - Laser diffraction methods"; $D_{10}$, $D_{50}$ and $D_{90}$ indicate the corresponding particle size (manually accumulating the percentages of all particle size in front of or behind the particle size) when a cumulative particle size distribution of the samples reaches 10%, 50% and 90%, respectively; its physical meaning is that the number of particles having a particle size smaller than the refered particle size is 10%, 50% and 90% of all the particles.

According to the present invention, the degradable nanomaterial preferably has a degradation rate of 15-30% for 1h, a degradation rate of 32-50% for 2h, a degradation rate of 52-70% for 4h, and a degradation rate of 95% or more for 8h under a temperature condition of 90°C. The present inventors have found that in the preferred embodiment, the degradable nanomaterial not only can desirably promote rapid flow of working fluid and flow back out of the reservoir after the operation, increase the flow back efficiency of said working fluid, but also can satisfy the time requirement for the on-site operations of low-permeability tight oil and gas reservoirs.

In the invention, the specific detection process of degradation rate is as follows: measuring the initial weight $M_0$ of degradable nanomaterials, placing the degradable nanomaterials at 90°C for 1h, 2h, 4h, and 8h, respectively, then measuring the weight M of said degradable nanomaterials, and calculating the degradation rates of the degradable nanomaterials under the temperature condition of 90°C for 1h, 2h, 4h, and 8h, respectively based on the formula: degradation rate = $(M_0\text{-}M)/M_0 \times 100\%$.

In the invention, the degradable nanomaterial may be any nanoscale degradable material capable of forming the above specified molecular aggregate hydrodynamic particle size in liquid polyethylene glycol having a molecular weight of 380-430. Preferably, the degradable nanomaterial is a modified nanometer cyclic diester material, comprising cyclic diester particles and a fluorine-containing carbon chain active group adsorbed on a surface of said cyclic diester particles; the molecular aggregate hydrodynamic particle size $D_{10}$ of the degradable nanomaterial in a liquid polyethylene glycol having a molecular weight of 380-430 is 15-25μm, $D_{50}$ is equal to 60-90μm, and $D_{90}$ is equal to 160-190μm.

It shall be indicated by the present inventors that although the prior art has conducted researches on an use of the poly-cyclic-diester, and copolymer of cyclic diester and other monomers in the fracturing fluid, there is little research on use of cyclic diester in the fracturing fluid, primarily because cyclic diester is degradable at low temperatures, but it has the inconvenience of on-site operation and pumping the material due to the characteristics of the material itself. The use of cyclic diester particles in fracturing fluid is accomplished by chemically modifying the cyclic diester nanoparticle raw material to form a modified nanometer cyclic diester material with a specific molecular aggregate hydrodynamic particle size in liquid polyethylene glycol, the modified nanometer cyclic diester material not only retains its superior degradation properties at a lower temperatures (60-90°C), and the material can be easily pumped during the on-site operations. When the modified nanometer cyclic diester material is applied in a fracturing fluid system, it can achieve multiscale plugging of fractures and pore throats with different dimensions in the reservoirs, and has a high matching degree with the fractures and pore throats in the tight sandstone reservoirs, can meet the technical requirements for fracturing and modifying more low-permeability tight oil and gas reservoirs.

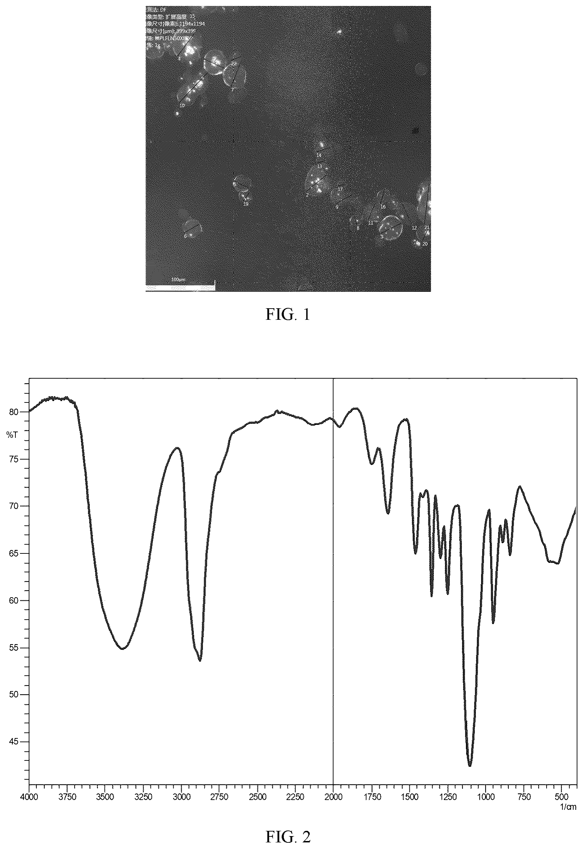

According to the present invention, preferably, the degradable nanomaterial has a content of fluorine carbon chain within the range of 2-7 wt%. The invention efficiently adsorbs the active groups of the fluorine-containing carbon chain to a surface of the cyclic diester particles (refer to the characterization diagram of a microscope structure of cyclic diester particles shown in FIG. 1, where the surface of the cyclic diester particles of the modified nanometer cyclic diester material is coated with adsorbed active groups), and the content of the fluorine carbon chain in the degradable nanomaterial is controlled within a specific range such that the nanometer material has the desirable and specific molecular aggregate hydrodynamic particle size in the liquid polyethylene glycol.

In the present invention, the content of fluorine carbon chain can be obtained by nuclear magnetic hydrogen spectroscopy, nuclear magnetic carbon spectroscopy, infrared detection in combination with the measurement method of fluorine elements.

According to the present invention, the degradable nanomaterial can be obtained by modifying various kinds of nano-microsphere cyclic diester raw materials, the cyclic diester particles are preferably C2-C8 cyclic diester, such as 1,4-dioxane-2,5-dione, 3,6-dimethyl-2,5-dioxo-1,4-dioxane, 3,6-dimethyl-1,4-dioxane-2,5-dione; more preferably, at least one of 1,4-dioxane-2,5-dione, 3,6-dimethyl-2,5-dioxo-1,4-dioxane, and 3,6-dimethyl-1,4-dioxane-2,5-dione.

According to the invention, preferably, the active group of said fluorine-containing carbon chain is C4-C10 perfluoroalkyl, C4-C10 perfluoroalkoxy, substituted aromatic group containing C4-C10 perfluoroalkyl, or substituted aromatic group containing C4-C10 perfluoroalkoxy; more preferably perfluoro nonenoyloxy phenyl and/or perfluoro octyl. The inventors have found that under the preferred embodiment, it not only is advantageous to promote the degradable nanomaterial to form a molecular aggregate of specific size in liquid polyethylene glycol, but also can decrease the contact angle of the working fluid system and improve flow back efficiency.

The second aspect of the present invention provides a preparation method for the degradable nanomaterial, the method comprises the following steps: subjecting a nano-microsphere cyclic diester raw material to hydroxylation treatment and activation treatment, then mixing and contacting with a fluorine-containing carbon chain surfactant.

The present invention provides a preparation method for the degradable nanomaterial, wherein nano-microsphere cyclic diester raw material is sequentially subjected to the hydroxylation treatment and activation treatment, then contacting and reacting with a fluorine-containing carbon chain surfactant in a specific ratio, the obtained degradable nanomaterial has an excellent degradability at lower temperatures, can be applied in oil and natural gas reservoir reformation working fluid systems, acts as a plugging agent during the on-site operation, greatly reduces filtration loss of the fracturing fluid, after completion of the operation, based on the degradability of the degradable nanomaterial, it not only does not form residues, but also can promote rapid flow of working fluid and flow back out of the reservoir, and increase the flow back efficiency of said working fluid, and decrease damage to the reservoir matrix.

According to the invention, the preparation process may be carried out in a suitable alcoholic solvent; preferably, the alcoholic solvent is polyethylene glycol liquid with a molecular weight of 380-430.

According to the present invention, the hydroxylation treatment process preferably comprises: mixing the nano-microsphere cyclic diester raw material with water in the presence of a reducing agent for carrying out the reaction I. The process hydroxylates the carbon-oxygen double bond on the surface of the aggregate particles of the nano-microsphere cyclic diester raw material by the action of a reducing agent, and can detect the formation of the hydroxyl group on the surface of the nano-microsphere cyclic diester raw material by using a hydroxyl detecting paper or a freshly produced copper hydroxide solution.

According to the present invention, the reducing agent is preferably an inorganic reducing agent, more preferably sodium borohydride and/or lithium aluminium hydride. The inventors have found that under the preferred embodiment, it is advantageous to expedite the reduction process and improve hydroxylation efficiency of the surface of cyclic diester particles.

According to the invention, preferably, the weight ratio of said nano-microsphere cyclic diester raw material, water and reducing agent is (3-5) : (2-4) :1.

According to the present invention, preferably, the conditions of reaction I comprise: a temperature from -5°C to 5°C, for example, the temperature may be -5°C, -3°C, -1°C, 0°C, 1°C, 3°C, 5°C, or a random value within the range consisting of any two numerical values, and a time of 4-8h, such as 4h, 5h, 6h, 7h, 8h, or a random value within the range consisting of any two numerical values. The conditions are conducive to improving the hydroxylation efficiency of the surface of said cyclic diester particles.

According to the present invention, the activation treatment process preferably comprises: mixing the hydroxylation treatment product with an activator for carrying out the reaction II. The inventors have found that, under the preferred embodiment, it is advantageous to promote adsorption of fluorine-containing carbon chain surfactant on the surface of cyclic diester particles and enhance structural stability of the degradable nanomaterials as a whole.

In the invention, the intermediate product obtained from purification after activation treatment may be subjected to a light quantitative analysis for amino groups on the surface of nanometer cyclic diester particles by using fluorescent amine, o-phthalaldehyde (OPA); three different amines selected from n-butylamine, 3-aminopropyltriethoxysilane (APTES) and glycosaminoglycan are used as standard amines for plotting a standard curve, and the effects of the different standard amines on the fluorescence intensity are analyzed; the results indicate that because the porous structure on the surface of the nanometer cyclic diester particles generates a hydrophobic environment favorable for fluorescence, the chemical environment of the amino group in the macromolecular amine is similar to that of the amino group on the surface of said nanometer cyclic diester particles, therefore, the standard curve is measured by using the macromolecular amine as the standard amine, and the amount of amino groups on the surface of the nanometer cyclic diester particles calculated from the standard curve is closer to the actual amount of amino groups on the surface of the nano particles than that obtained by using the micromolecule amine as the standard amine.

Further preferably, the activator is a nitrogen-based activator, more preferably urea. The inventors have discovered that in the preferred embodiment, it effectively promotes the adsorption and encapsulation of the modifying agent with fluorine-substituted alkyl groups at the surface of said cyclic diester particles. When the activator is urea, the processing of reaction II during the activation reaction process can also be characterized by detecting the formation of ammonia gas.

According to the present invention, the weight ratio of said activator to said nano-microsphere cyclic diester raw material is preferably (0.5-1.5) :1.

According to the invention, the conditions of reaction II preferably comprise: a temperature within the range of 10-40°C, for example, the temperature may be 10°C, 15°C, 20°C, 25°C, 30°C, 35°C, 40°C, or a random value within the range consisting of any two numerical values, and a time of 2-8h, such as 2h, 4h, 6h, 8h, or a random value within the range consisting of any two numerical values. The conditions are advantageous for improving the modification efficiency of the reaction with the activator.

According to the present invention, the molar ratio of fluorine element and carbon element in the fluorine-containing carbon chain surfactant is preferably (1-3) :1.

According to the invention, preferably, the fluorine-containing carbon chain surfactant has an active group of a fluorine-containing carbon chain, the active group of said fluorine-containing carbon chain is C4-C10 perfluoroalkyl or C4-C10 perfluoroalkoxy, substituted aromatic group containing C4-C10 perfluoroalkyl, or substituted aromatic group containing C4-C10 perfluoroalkoxy. More preferably, the fluorine-containing carbon chain surfactant is perfluoro nonenoyloxy benzene sulfonate and/or perfluoro octyl sulfonate. Among them, the perfluoro nonenoyloxy benzene sulfonate may be sodium perfluoro nonenoyloxy benzene sulfonate, potassium perfluoro nonenoyloxy benzene sulfonate and the like, and the perfluoro octyl sulfonate may be sodium perfluoro octyl sulfonate, potassium perfluoro octyl sulfonate and the like. The inventors have discovered that, under the preferred embodiment, it is advantageous to improve the adsorption effect of the fluorine-containing group on the surface of said cyclic diester particle.

According to the present invention, the fluorine-containing carbon chain surfactant is perfluoro nonenoyloxy benzene sulfonate and/or perfluoro octyl sulfonate; when urea is used as the activator, the sulfonic acid group of the fluorine-containing carbon chain surfactant may be chemically bonded with an amino group on the surface of the activation reaction product, which is advantageous for improving the adsorption efficiency of the fluorine-containing group on the cyclic diester surface.

According to the present invention, a dosage ratio of the nano-microsphere cyclic diester raw material to the fluorine-containing carbon chain surfactant is preferably (2-4) :1, which is advantageous for reducing the contact angle of degradable nanomaterials and controlling the solid-phase degradation rate.

According to the invention, it is preferred that the contacting conditions comprise: a temperature within the range of 40-60°C, for example, the temperature may be 40°C, 45°C, 50°C, 55°C, 60°C, or a random value within the range consisting of any two numerical values, and a time of 4-8h, such as 4h, 5h, 6h, 7h, 8h, or a random value within the range consisting of any two numerical values. The inventors have found that under the preferred embodiment, it is advantageous to desirably adsorb the active groups of the fluorine-containing carbon chain on the cyclic diester particles and improve the flow back efficiency of the working fluid, wherein the adsorption reaction of the fluorine-containing carbon chain surfactant on the surface of cyclic diester particles during the contacting process may be characterized by detecting a change in pH before and after the contacting and reacting process.

According to the present invention, the nano-microsphere cyclic diester raw material is preferably C2-C8 cyclic diester, more preferably at least one of 1,4-dioxane-2,5-dione, 3,6-dimethyl-2,5-dioxo-1,4-dioxane and 3,6-dimethyl-1,4-dioxane-2,5-dione.

The preparation process of the degradable nanomaterial provided by the invention further comprises: subjecting the product obtained by contacting to a purification treatment process to obtain a degradable nanomaterial with high purity. In particular, the purification treatment can be performed by water washing, filtration, low temperature drying (e.g., 35-45°C), etc.

The third aspect of the present invention provides a degradable nanomaterial composition, the composition comprises a solvent and the aforementioned degradable nanomaterial or the degradable nanomaterial prepared with the aforementioned method.

The present invention provides a degradable nanomaterial composition based on a degradable nanomaterial contained therein, the composition can be conveniently pumped during the on-site operation; when the composition is added into a fracturing fluid, it improves flow back efficiency of the fracturing fluid and reduces damages to the fracturing fluid.

According to the invention, the composition preferably has a content of said degradable nanomaterial within the range of 25-50 wt%, for example, the content may be 25 wt%, 30 wt%, 35 wt%, 40 wt%, 45 wt%, 50 wt%, or a random value within the range consisting of any two numerical values. The inventors have found that, under the preferred embodiment, it is advantageous to reduce the initial contact angle of the composition (the contact angle of the composition is within the range of 28-33°C), promote rapid flow of working fluid and flow back out of the reservoir, and the gas measurement permeability recovery rate (flow back efficiency) is greater than 75%.

In the invention, the contact angle of the composition is determined by using a contact angle measurement instrument, and dropwise adding 5μL of the composition onto a reservoir rock core chip having porosity and permeability with the same order of magnitude.

According to the invention, preferably, the composition has a filtration loss reduction rate greater than 40% for a fracturing fluid consisting of 0.65wt% of a thickener + 0.3wt% of a cross-linking agent + 0.05wt% of a gel breaker and having a filtration loss of 600 mL; the composition can further reduce the filtration loss damage of a working fluid system on the reservoirs.

Wherein the filtration loss reduction rate refers to the ratio of the quantitative change of filtration loss before and after the addition of said composition provided the invention (the addition amount of said composition is preferably within the range of 0.1-1 wt%) relative to the initial filtration loss of the fracturing fluid, the calculation formula is as shown in formula (I);

$$\Delta P = \frac{P_0 - P_1}{P_0} \times 100\% \ \text{Formula (I)},$$

in formula (I):

$\Delta P$ - fracturing fluid filtration loss reduction rate, %;
$P_0$ - filtration loss of the fracturing liquid before the addition of said composition provided by the invention, mL;
$P_1$ - filtration loss of the fracturing liquid after the addition of said composition provided by the invention, mL;
The filtration loss of the fracturing fluid was measured by using a high temperature and high pressure filtration loss instrument, with reference to the Industry Standard SY/T 5107-2016 "The evaluation measurement for properties of water-based fracturing fluid" in China.

In the invention, the thickener may be any substance that can act as a thickener in the fracturing fluid, the cross-linking agent may be any substance that can act as a cross-linking agent in the fracturing fluid, and the gel breaker may be any substance that can act as a gel breaker in the fracturing fluid. Illustratively, the thickener is an acrylamide homopolymer and/or a copolymer of acrylamide and other monomer, wherein the other monomer is at least one selected from the group consisting of acryloyloxy ethyl trimethyl ammonium chloride, sodium acrylate and acrylic acid; further preferably, the copolymer of acrylamide and another monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer. Further preferably, the acrylamide homopolymer has a molecular weight of 18,000,000 or more, and the copolymer of acrylamide and other monomer has a molecular weight of 18,000,000 or more.

In the invention, the cross-linking agent is an organo-zirconium cross-linking agent, preferably zirconium lactate; and the gel breaker is a persulfate, such as ammonium persulfate, sodium persulfate, potassium persulfate, preferably ammonium persulfate.

In the present invention, the specific formulation of the fracturing fluid with a filtration loss of 600mL consisting of a thickener, a cross-linking agent and a gel breaker may be: 0.65wt% of acrylamide homopolymer with a relative molecular weight of 18,000,000 + 0.3wt% of zirconium lactate + 0.05wt% of ammonium persulfate. The fracturing fluid meeting such a condition may be, for example, a fracturing fluid product of the SPR series produced by the Dongying Spring Petroleum Engineering Technology Co., Ltd., for example, a fracturing fluid formed by mixing acrylamide homopolymer (thickener SPR-08), zirconium lactate (cross-linking agent SPR-18) and ammonium persulfate according to the aforementioned ratio.

According to the invention, the solvent is preferably an organic alcohol, which may be any fatty alcohol or aromatic alcohol, more preferably liquid polyethylene glycol having a molecular weight of 380-430. The inventors have found that under the preferred embodiment, it is advantageous to further reduce the initial contact angle of the composition and decrease damage of said fracturing fluid to the reservoir.

The fourth aspect of the present invention provides an use of the aforementioned degradable nanomaterial, the degradable nanomaterial prepared with the aforementioned method, or the aforementioned degradable nanomaterial composition in an oil and natural gas reservoir reformation working fluid.

In the invention, the oil and natural gas reservoir reformation working fluid may be a fracturing fluid, a drilling fluid, a completion fluid or any other working fluid; preferably, the degradable nanomaterial and degradable nanomaterial composition described above are used as a plugging agent in the fracturing fluid. By functioning as a plugging agent during the on-site operation, the plugging agent can temporarily reduce the formation permeability or temporarily plug the high permeability oil layers, greatly decrease the filtration loss of the fracturing fluid, after completion of the operation, based on the degradability of the degradable nanomaterial, it not only can effectively reduce the residue content of the plugging agent per se, decrease damage to the reservoir matrix, but also can promote rapid flow of fracturing fluid and flow back out of the reservoir, and increase the flow back efficiency of said working fluid.

The fifth aspect of the present invention provides a fracturing fluid comprising the aforementioned degradable nanomaterial composition.

According to the present invention, preferably, the degradable nanomaterial composition is contained in an amount of 0.1-1 wt%, based on the total amount of the fracturing fluid. The inventors have discovered that under the preferred embodiment, it is advantageous to desirably reduce the filtration loss of the fracturing fluid, promote rapid flow of the fracturing fluid and flow back out of the reservoir, and reduce the damage on the reservoir by the fluid.

According to the invention, preferably, the fracturing fluid further comprises: 0.1-1.2 wt% of a thickener, 0-0.6 wt% of a cross-linking agent and 0.01-0.1% of a gel breaker, based on the total amount of the fracturing fluid. The fracturing fluid provided by the present invention is added with the degradable nanomaterial composition provided by the invention based on the existing conventional fracturing fluid system, it can significantly reduce the solid and liquid phase damages caused by filtration loss of the working fluid, and improve the flow back efficiency of the working fluid as compared to the initial fracturing fluid system.

According to the invention, the thickener is preferably an acrylamide homopolymer and/or a copolymer of acrylamide and other monomer, wherein the other monomer is at least one selected from the group consisting of acryloyloxy ethyl trimethyl ammonium chloride, sodium acrylate and acrylic acid; further preferably, the copolymer of acrylamide and another monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer; the cross-linking agent is an organo-zirconium cross-linking agent and the gel breaker is a persulfate.

The invention will be described in detail below with reference to examples.

In the following examples, the nano-microsphere 1,4-dioxane-2,5-dione was used as the nano-microsphere cyclic diester raw material I, purchased from Suzhou Guren Nanomaterial Technology Co., Ltd., wherein the CAS number was 502-97-6, and particle size was within the range of 100-120nm; the nano-microsphere 3,6-dimethyl-2,5-dioxo-1,4-dioxane was used as the nano-microsphere cyclic diester raw material II, commercially available from Suzhou Guren Nanomaterial Technology Co., Ltd., wherein the CAS number was 95-96-5, and particle size was within the range of 200-250nm; the sodium perfluoro nonenoyloxy benzene sulfonate had a CAS number 87-56-8; the potassium perfluoro octyl sulfonate had a CAS number 2795-39-3; the liquid polyethylene glycol was purchased from Chengdu Kelong Chemicals Co., Ltd., the product specification was polyethylene glycol 400, with an average molecular weight of 400 and a molecular weight within the range of 380-430. Unless otherwise specified in the invention, all other reagents were commercially available and conventional products.

In the following examples, the content of fluorine carbon chain in the degradable nanomaterial was determined by nuclear magnetic hydrogen spectroscopy, nuclear magnetic carbon spectroscopy and infrared detection; the elemental analysis was performed using a scanning electron microscope with the model FP2012114, and the peripheral coating structure of the cyclic diester particles was characterized using a microscope with the model OLYMPUS 200.

The specific detection process of degradation rate was as follows: the initial weight $M_0$ of degradable nano-materials was measured, placed the degradable nanomaterials at 90°C for 1h, 2h, 4h, and 8h, respectively, the weight M of said degradable nanomaterials was then measured, and the degradation rates of the degradable nanomaterials under the temperature condition of 90°C for 1h, 2h, 4h, and 8h, respectively were calculated based on the formula: degradation rate = $(M_0-M)/M_0 \times 100\%$.

The detection process of the molecular aggregate hydrodynamic particle size of the degradable nanomaterial in liquid polyethylene glycol having a molecular weight of 380-430 was as follows: the degradable nanomaterial was mixed with liquid polyethylene glycol having a molecular weight of 380-430 in a weight ratio of 35:65 to obtain a dispersed sample, the testing was performed by using a Fritsch 22 type laser particle size analyzer at the room temperature 20-25°C and an atmospheric pressure according to the measurement method in the China National Standard GB/T 19077-2016 "Particle size analysis - Laser diffraction methods", wherein the frequency of the laser particle size analyzer was 50-60HZ, and the pump speed was 40L/min.

The testing method of contact angle was as follows: a contact angle measurement instrument was used, the contact angle was determined by dropwise adding 5$\mu$L of the composition onto a reservoir rock core chip having porosity and permeability with the same order of magnitude.

The filtration loss P of the fracturing fluid with or without the addition of the composition was determined by using a high temperature high pressure filtration loss instrument, with reference to the Industry Standard SY/T5107-2016 "The evaluation measurement for properties of water-based fracturing fluid" in China; the filtration loss reduction rate of the fracturing fluid after the addition of said composition was calculated according to the formula (I),

$$\Delta P = \frac{P_0 - P_1}{P_0} \times 100\% \ \ \text{Formula (I),}$$

In formula (I):

$\Delta P$ - fracturing fluid filtration loss reduction rate, %;
$P_0$ - filtration loss of the fracturing liquid before the addition of said composition provided by the invention, mL;
$P_1$ - filtration loss of the fracturing liquid after the addition of said composition provided by the invention, mL.

The specific experiment for evaluation of the gas measurement permeability recovery rate (flow back efficiency) of fracturing fluid was as follows:

The initial permeability of the gas measurement rock core was determined using a tight sandstone natural rock core (with a rock core length of 3.8cm and a diameter of 2.54cm) with the same order of magnitude and the gas measurement permeability within the range of 0.001-0.1 millidarcy, and using the standard brine (2wt% KC1 + 5.5wt% NaCl +0.45wt% $MgCl_2$ + 0.55wt% $CaCl_2$) having a salt content of 20,000 mg/L to establish an initial water saturation of 40wt%;

The fracturing fluid was added with 0.08wt% ammonium persulfate and subjected to gel breaking for 8h, a gel breaking solution was obtained, the gel breaking solution was heated to 80°C and then added into an intermediate vessel, which was pressurized by a pressure source to 3.5MPa, reverse extrusion into rock core from other end inlet of rock core holder, after the displacement and damage with the gel breaking solution for 180min, the gas measurement rock core permeability at 24h after the damage with the gel breaking solution for 180min by the gel breaking solution was measured, the ratio of the gas measurement rock core permeability after damage for 24h to the initial permeability before the damage was calculated according to the formula (II), the permeability recovery rate k (24h flow back efficiency) of the fracturing fluid was obtained;

The gas measurement permeability formula:

$$K = \frac{2Q_0 p_0 \mu L}{A(p_1^2 - p_2^2)} \times 10^{-1} \qquad \text{formula (II)},$$

In the formula, K denoted the permeability of rock core, $\mu m^2$;

$Q_0$ - volumetric flow of gas under an atmospheric pressure $p_0$ (0.1 MPa) , mL/s;
$\mu$ - viscosity of the gas passing through the rock core, 0.01795MPa·s;
$L$ - rock core length, cm;
$A$ - cross sectional area of the rock core, cm$^2$;
$p_1$ - rock core inlet pressure (displacement pressure +0.0955), MPa;
$p_2$ - rock core outlet pressure, 0.0955 MPa.

The 24-hour permeability recovery rate was calculated according to formula (III):
The rock core permeability recovery rate

$$k = \frac{\dfrac{K_{fi}}{K_0} \times 100\%}{} \qquad \text{Formula (III)},$$

In the formula, $K_{fi}$ denoted the permeability of rock core after 24h of damage and flow back, mD;
$K_0$ - initial permeability of the rock core, mD.

Example 1

1) 30g of nano-microsphere cyclic diester raw material I, 7.5g of sodium borohydride, and 20g of water were mixed, the mixture was subjected to the reaction in an ice water bath for 6h, a hydroxyl test paper was used for detecting whether the reaction was complete, a first mixture was obtained;
2) The first mixture was blended with 30g of urea, then subjected to the reaction under a temperature condition of 25°C for 5h, a second mixture was obtained;
3) The second mixture was blended with 7.5g of sodium perfluoro nonenoyloxy benzene sulfonate, then subjected to the reaction under a temperature condition of 50°C for 6h (the reaction process may be characterized by the absorbance measured by colorimetry), the reaction product was subjected to washing with water, filtering, drying at a low temperature, and purification, a modified nanometer cyclic diester material was prepared, it was regarded as the degradable nanomaterial.

In the reaction liquid in Example 1 prior to the purification, a characterization diagram of a microscope structure of cyclic diester particles was as shown in FIG. 1, which illustrated that the periphery of said cyclic diester particles was coated with adsorbent groups; the elemental analysis of the modified nanometer cyclic diester material after the purification process showed that fluorine elements were introduced into the adsorbent groups at the periphery of the modified nanometer cyclic diester material in the composition; an infrared spectrum of the modified nanometer cyclic diester material after purification was shown in FIG. 2, which indicated that the modified nanometer cyclic diester material included: carbon-oxygen double bonds with peaks near 1641cm$^{-1}$, long-chain alkanes with peaks near 2800-3000cm$^{-1}$, sulfur-oxygen double bonds with peaks near 1749cm$^{-1}$, benzene ring with peaks near 947cm$^{-1}$, fluorine carbon bonds with peaks near 1352-1460cm$^{-1}$, and amino groups with peaks near 3300cm$^{-1}$.

Example 2

1) 40g of nano-microsphere cyclic diester raw material II, l0g of lithium aluminum hydride, and 20g of water were mixed, the mixture was subjected to the reaction at the temperature condition of 5°C for 4h, a hydroxyl test paper was used for detecting whether the reaction was complete, a first mixture was obtained;
2) The first mixture was blended with 55g of urea, then subjected to the reaction under a temperature condition of 40°C for 3h, a second mixture was obtained;

3) The second mixture was blended with 15g of sodium perfluoro nonenoyloxy benzene sulfonate, then subjected to the reaction under a temperature condition of 40°C for 8h, the reaction product was subjected to washing with water, filtering, drying at a low temperature, and purification, a modified nanometer cyclic diester material was prepared, it was regarded as the degradable nanomaterial.

Example 3

1) 20g of nano-microsphere cyclic diester raw material (composed of 10g of nano-microsphere cyclic diester raw material I and 10g of nano-microsphere cyclic diester raw material II), 5g of sodium borohydride, and 20g of water were mixed, the mixture was subjected to the reaction at the temperature condition of -5°C for 8h, a hydroxyl test paper was used for detecting whether the reaction was complete, a first mixture was obtained;

2) The first mixture was blended with 15g of urea, then subjected to the reaction under a temperature condition of 10°C for 8h, a second mixture was obtained;

3) The second mixture was blended with 5g of potassium perfluoro octyl sulfonate, then subjected to the reaction under a temperature condition of 60°C for 4h, the reaction product was subjected to washing with water, filtering, drying at a low temperature, and purification, a modified nanometer cyclic diester material was prepared, it was regarded as the degradable nanomaterial.

Example 4

The degradable nanomaterial was prepared according to the method of Example 1, except that 20g of water in step 1) was replaced with 10g of water.

Example 5

The degradable nanomaterial was prepared according to the method of Example 1, except that the dosage of sodium perfluoro nonenoyloxy benzene sulfonate in step 3) was replaced with 3g.

Example 6

The degradable nanomaterial was prepared according to the method of Example 1, except that in step 2), the dosage of nano-microsphere cyclic diester raw material I was replaced with 20g, and the dosage of urea was replaced with 50g.

Example 7

The degradable nanomaterial was prepared according to the method of Example 1, except that the reaction temperature in step 1) was replaced with 10°C.

Example 8

The degradable nanomaterial was prepared according to the method of Example 1, except that the reaction temperature in step 2) was replaced with 50°C.

Example 9

The degradable nanomaterial was prepared according to the method of Example 1, except that the reaction temperature in step 3) was replaced with 70°C.

Comparative Example 1

30g of nano-microsphere cyclic diester raw material I were physically mixed with 7.5g of sodium perfluoro nonenoyloxy benzene sulfonate, the mixture was subjected to washing with water, filtering, drying at a low temperature, a modified nanometer cyclic diester material was prepared, it was regarded as the degradable nanomaterial.

Comparative Example 2

30g of nano-microsphere cyclic diester raw material I, 7.5g of sodium borohydride, 60g of water, 30g of urea, 7.5g of sodium perfluoro nonenoyloxy benzene sulfonate were physically mixed, the mixture was subjected to washing with water, filtering, drying at a low temperature, a modified nanometer cyclic diester material was prepared, it was regarded as the degradable nanomaterial.

Comparative Example 3

1) 30g of polyglycolide raw material (purchased from Wuhan Haishan Technology Co., Ltd., with a particle size of 200-250nm), 7.5g of sodium borohydride, and 20g of water were mixed, the mixture was subjected to the reaction in an ice water bath for 6h, a hydroxyl test paper was used for detecting whether the reaction was complete, a first mixture was obtained;
2) The first mixture was blended with 30g of urea, then subjected to the reaction under a temperature condition of 25°C for 5h, a second mixture was obtained;
3) The second mixture was blended with 7.5g of sodium perfluoro nonenoyloxy benzene sulfonate, then subjected to the reaction under a temperature condition of 50°C for 6h, the reaction product was subjected to washing with water, filtering, drying at a low temperature, and purification, a modified nanometer cyclic diester material was prepared, it was regarded as the degradable nanomaterial.

Comparative Example 4

The commercially available fracturing drainage aid SPR-201 (oleyl amine polyoxyethylene ether) manufactured by the Dongying Spring Petroleum Engineering Technology Co., Ltd. was used as the degradable nanomaterial in Comparative Example 4.

Test Example 1

The solid phase degradation rates of the materials prepared in Example 1-9 and Comparative Example 1-3 under the temperature condition of 90°C for 1h, 2h, 4h, 8 h respectively were tested, the results were shown in Table 1.

Table 1

| No. | Content of fluorine carbon chain, wt% | Solid phase degradation rate under the temperature condition of 90°C, % | | | |
|---|---|---|---|---|---|
| | | 1h | 2h | 4h | 8h |
| Example 1 | 5.22 | 20.6 | 38.9 | 60.8 | 98.3 |
| Example 2 | 6.52 | 18.9 | 34.5 | 52.4 | 96.1 |
| Example 3 | 6.40 | 25.7 | 46.8 | 66.3 | 99.2 |
| Example 4 | 5.20 | 20.2 | 37.9 | 59.1 | 98.2 |
| Example 5 | 2.22 | 19.9 | 36.6 | 58.5 | 97.0 |
| Example 6 | 4.60 | 20.3 | 38.0 | 60.2 | 97.7 |
| Example 7 | 5.14 | 20.4 | 38.2 | 60.4 | 98.1 |
| Example 8 | 5.18 | 20.5 | 38.4 | 60.6 | 98.2 |
| Example 9 | 5.19 | 20.4 | 38.1 | 60.3 | 98.0 |
| Comparative Example 1 | 1.43 | 88.2 | 96.8 | 98.9 | 99.4 |
| Comparative Example 2 | 1.52 | 88.0 | 96.1 | 98.6 | 99.5 |
| Comparative Example 3 | 1.04 | 2.3 | 3.2 | 5.7 | 10.2 |
| N ano-microsphere cyclic diester raw material I | - | 90.5 | 99.5 | 100 | 100 |

(continued)

| No. | Content of fluorine carbon chain, wt% | Solid phase degradation rate under the temperature condition of 90°C, % | | | |
|---|---|---|---|---|---|
| | | 1h | 2h | 4h | 8h |
| Polyglycolide raw material | - | 6.8 | 8.7 | 9.1 | 10.2 |

Test Example 2

The compositions were obtained by mixing the materials prepared in Example 1-9 and Comparative Example 1-3, the fracturing drainage aid in Comparative Example 4, with liquid polyethylene glycol in a weight ratio of 1: (1-3) respectively; the composition was prepared by mixing the material prepared in Example 1 with ethanol in a weight ratio of 35:65, the composition of nano-microsphere cyclic diester raw material I, nano-microsphere cyclic diester raw material II, and liquid polyethylene glycol was used as a control group; the initial contact angle and molecular aggregate hydrodynamic particle size $D_{10}$, $D_{50}$, $D_{90}$ of said compositions were tested, the results were shown in Table 2.

Table 2

| No. | $D_{10}/\mu m$ | $D_{50}/\mu m$ | $D_{90}/\mu m$ | Initial contact angle /° |
|---|---|---|---|---|
| Example 1+ liquid polyethylene glycol (35:65) | 20 | 70 | 170 | 28.7 |
| Example 1+ethanol (35:65) | 10 | 50 | 120 | 29.5 |
| Example 2+ liquid polyethylene glycol (35:65) | 22 | 80 | 180 | 27.0 |
| Example 3+ liquid polyethylene glycol (35:65) | 15 | 60 | 160 | 30.1 |
| Example 4+ liquid polyethylene glycol (35:65) | 21 | 68 | 169 | 29.7 |
| Example 5+ liquid polyethylene glycol (35:65) | 25 | 90 | 190 | 31.7 |
| Example 6+ liquid polyethylene glycol (35:65) | 18 | 66 | 165 | 29.0 |
| Example 7+ liquid polyethylene glycol (30:70) | 20 | 69 | 170 | 29.3 |
| Example 8+ liquid polyethylene glycol (35:65) | 19 | 70 | 168 | 29.6 |
| Example 9+ liquid polyethylene glycol (40:60) | 20 | 68 | 169 | 30.0 |
| Comparative Example 1+ liquid polyethylene glycol (35:65) | 10 | 50 | 140 | 36.5 |
| Comparative Example 2+ liquid polyethylene glycol (35:65) | 12 | 55 | 144 | 35.8 |
| Comparative Example 3+ liquid polyethylene glycol (35:65) | 74.1 | 153.9 | 282.7 | 33.9 |
| Comparative Example 4+ liquid polyethylene glycol (35:65) | Particles were not measured from the liquid | | | 49.7 |
| Nano-microsphere cyclic diester raw material I+ liquid polyethylene glycol (35:65) | 4 | 30 | 100 | 51.7 |
| Nano-microsphere cyclic diester raw material II+ liquid polyethylene glycol (35:65) | 8 | 75 | 110 | 52.1 |

Test Example 3

Step 1) 0.65g of acrylamide homopolymer with a weight average molecular weight of 18,000,000 (purchased from Dongying Spring Petroleum Engineering Technology Co., Ltd., product model was thickener SPR-08) was added into 99g of clear water, the adding rate was controlled during the addition process to prevent the formation of fish eyes, and the rotating speed was adjusted constantly to ensure the whirlpool condition until it was sufficiently dissolved to form a homogeneous solution;

Step 2): the stirring state was maintained, 0.5g of the various compositions prepared in Test Example 2, 0.3g of cross-linking agent zirconium lactate (purchased from Dongying Spring Petroleum Engineering Technology Co., Ltd., product model was cross-linking agent SPR-18), and 0.05g of ammonium persulfate were added into the solution obtained in step 1), and stirred to obtain a fracturing fluid.

Test Example 4

Step 1) 0.1g of acrylamide-acryloyloxy ethyl trimethyl ammonium chloride copolymer with a weight average molecular weight of 18,000,000 (purchased from Dongying Spring Petroleum Engineering Technology Co., Ltd., product model was thickener SPR-06) was added into 99.79g of clear water, the adding rate was controlled during the addition process to prevent the formation of fish eyes, and the rotating speed was adjusted constantly to ensure the whirlpool condition until it was sufficiently dissolved to form a homogeneous solution;

Step 2): the stirring state was maintained, 0.1g of the composition corresponding to the material prepared in Example 1 and 0.01g of ammonium persulfate were added into the solution obtained in step 1), and stirred to obtain a fracturing fluid.

Test Example 5

Step 1) 1.2g of polyacrylamide with a weight average molecular weight of 18,000,000 (purchased from Dongying Spring Petroleum Engineering Technology Co., Ltd., product model was thickener SPR-08) was added into 99.1g of clear water, the adding rate was controlled during the addition process to prevent the formation of fish eyes, and the rotating speed was adjusted constantly to ensure the whirlpool condition until it was sufficiently dissolved to form a homogeneous solution;

Step 2): the stirring state was maintained, 1g of the composition corresponding to the material prepared in Example 1, 0.6g of cross-linking agent zirconium lactate (purchased from Dongying Spring Petroleum Engineering Technology Co., Ltd., product model was cross-linking agent SPR-18), and 0.1g of ammonium persulfate were added into the solution obtained in step 1), and stirred to obtain a fracturing fluid.

Test Example 6

The fracturing fluid was prepared according to the method in Test Example 5, except that the dosage of the composition corresponding to the material prepared in Example 1 in step 2) was replaced by 1.5g.

Comparative Test Example

The fracturing fluid was prepared according to the method in Test Example 3, except that 0.5g of the various compositions prepared in Test Example 2 were added in step 2).

The fracturing fluid prepared in Comparative Test Example was used below as the initial fracturing fluid.

The filtration loss and filtration loss reduction rate of fracturing fluids prepared in Test Examples 3-6 and Comparative Test Example were measured, and the evaluation experiment on the permeability recovery rate (flow back efficiency) was implemented, the results were shown in Table 3.

Table 3

| No. | Fracturing fluid filtration loss/mL | Filtration loss reduction rate/% | Permeability recovery rate/% (24-hour flow back efficiency) |
|---|---|---|---|
| Example 1+ liquid polyethylene glycol (35:65) | 310.8 | 48.2 | 84.8 |
| Example 1+ethanol (35:65) | 348.6 | 41.9 | 80.1 |

(continued)

| No. | Fracturing fluid filtration loss/mL | Filtration loss reduction rate/% | Permeability recovery rate/% (24-hour flow back efficiency) |
|---|---|---|---|
| Example 2+ liquid polyethylene glycol (35:65) | 320.4 | 46.6 | 89.9 |
| Example 3+ liquid polyethylene glycol (35:65) | 332.2 | 44.6 | 82.1 |
| Example 4+ liquid polyethylene glycol (35:65) | 350.1 | 41.7 | 79.6 |
| Example 5+ liquid polyethylene glycol (35:65) | 354.6 | 40.9 | 72.5 |
| Example 6+ liquid polyethylene glycol (35:65) | 351.9 | 41.4 | 80.7 |
| Example 7+ liquid polyethylene glycol (30:70) | 349.8 | 41.7 | 78.5 |
| Example 8+ liquid polyethylene glycol (35:65) | 353.2 | 41.1 | 76.6 |
| Example 9+ liquid polyethylene glycol (40:60) | 356.6 | 40.6 | 75.3 |
| Comparative Example 1+ liquid polyethylene glycol (35:65) | 427.2 | 28.8 | 53.8 |
| Comparative Example 2+ liquid polyethylene glycol (35:65) | 422.4 | 29.6 | 54.7 |
| Comparative Example 3+ liquid polyethylene glycol (35:65) | 378.2 | 37.0 | 40.4 |
| Comparative Example 4+ liquid polyethylene glycol (35:65) | 596 | 0.7 | 53.5 |
| Nano-microsphere cyclic diester raw material I+ liquid polyethylene glycol (35:65) | 392.5 | 34.6 | 53.3 |
| Nano-microsphere cyclic diester raw material II+ liquid polyethylene glycol (35:65) | 391.9 | 34.7 | 53.7 |
| Liquid polyethylene glycol | 598 | 0.3 | 56.0 |
| Test Example 4 | 349.4 | 41.8 | 75.1 |
| Test Example 5 | 250.2 | 58.3 | 83.9 |
| Test Example 6 | 29.4 | 95.1 | 84.3 |
| Initial fracturing fluid | 600 | / | 52.4 |

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

Claims

1. A degradable nanomaterial, is **characterized in that** the molecular aggregate hydrodynamic particle size $D_{10}$ of the

degradable nanomaterial in a liquid polyethylene glycol having a molecular weight of 380-430 is less than 30$\mu$m, $D_{50}$ is equal to 50-120$\mu$m, and $D_{90}$ is equal to150-250$\mu$m.

2. The degradable nanomaterial according to claim 1, wherein the degradable nanomaterial has a degradation rate of 15-30% for 1h, a degradation rate of 32-50% for 2h, a degradation rate of 52-70% for 4h, and a degradation rate of 95% or more for 8h under a temperature condition of 90°C.

3. The degradable nanomaterial according to claim 1 or 2, wherein the degradable nanomaterial comprises cyclic diester particles and a fluorine-containing carbon chain active group adsorbed on a surface of said cyclic diester particles; the molecular aggregate hydrodynamic particle size $D_{10}$ of the degradable nanomaterial in a liquid polyethylene glycol having a molecular weight of 380-430 is equal to 15-25$\mu$m, $D_{50}$ is equal to 60-90$\mu$m, and $D_{90}$ is equal to160-190$\mu$m.

4. The degradable nanomaterial according to claim 3, wherein the degradable nanomaterial has a content of fluorine carbon chain within the range of 2-7 wt%.

5. The degradable nanomaterial according to claim 3, wherein the cyclic diester particle is C2-C8 cyclic diester, more preferably at least one selected from the group consisting of 1,4-dioxane-2,5-dione, 3,6-dimethyl-2,5-dioxo-1,4-dioxane and 3,6-dimethyl-1,4-dioxane-2,5-dione.
   Preferably, the active group of said fluorine-containing carbon chain is C4-C10 perfluoroalkyl, C4-C10 perfluoroalkoxy, substituted aromatic group containing C4-C10 perfluoroalkyl, or substituted aromatic group containing C4-C10 perfluoroalkoxy; more preferably perfluoro nonenoyloxy phenyl and/or perfluoro octyl.

6. A preparation method for the degradable nanomaterial, is **characterized in that** the method comprises the following steps: subjecting a nano-microsphere cyclic diester raw material to hydroxylation treatment and activation treatment, then mixing and contacting with a fluorine-containing carbon chain surfactant.

7. The preparation method according to claim 6, wherein the hydroxylation treatment process comprises: mixing the nano-microsphere cyclic diester raw material with water in the presence of a reducing agent for carrying out the reaction I;

   preferably, the reducing agent is an inorganic reducing agent, more preferably sodium borohydride and/or lithium aluminium hydride;
   preferably, the weight ratio of said nano-microsphere cyclic diester raw material, water and reducing agent is (3-5) : (2-4) :1;
   preferably, the conditions of reaction I comprise: a temperature from -5°C to 5°C and a time of 4-8 h.

8. The preparation method according to claim 6 or 7, wherein the activation treatment process comprises: mixing the hydroxylation treatment product with an activator for carrying out the reaction II;

   preferably, the activator is a nitrogen-based activator, more preferably urea;
   preferably, the weight ratio of said activator to said nano-microsphere cyclic diester raw material is (0.5-1.5) :1;
   preferably, the conditions of reaction II comprise: a temperature within the range of 10-40°C and a time of 2-8 h.

9. The preparation method according to any one of claims 6-8, wherein the molar ratio of fluorine element and carbon element in the fluorine-containing carbon chain surfactant is (1-3) :1;

   preferably, the fluorine-containing carbon chain surfactant has an active group of a fluorine-containing carbon chain, the active group of said fluorine-containing carbon chain is C4-C10 perfluoroalkyl or C4-C10 perfluoroalkoxy, substituted aromatic group containing C4-C10 perfluoroalkyl, or substituted aromatic group containing C4-C10 perfluoroalkoxy;
   preferably, the fluorine-containing carbon chain surfactant is perfluoro nonenoyloxy benzene sulfonate and/or perfluoro octyl sulfonate.

10. The preparation method according to any one of claims 6-9, wherein a dosage ratio of the **nano-microsphere** cyclic diester raw material to the fluorine-containing carbon chain surfactant is (2-4) :1;
   the mixing and contacting conditions comprise: a temperature within the range of 40-60°C and a time of 4- 8 h.

11. The preparation method according to any one of claims 6-10, wherein the nano-microsphere cyclic diester raw material is C2-C8 cyclic diester, more preferably at least one of 1,4-dioxane-2,5-dione, 3,6-dimethyl-2,5-dioxo-1,4-dioxane and 3,6-dimethyl-1,4-dioxane-2,5-dione.

12. A degradable nanomaterial composition, is **characterized in that** the composition comprises a solvent and the degradable nanomaterial according to any one of claims 1-5 or the degradable nanomaterial prepared with the method according to any one of claims 6-11.

13. The degradable nanomaterial composition according to claim 12, wherein the composition has a content of said degradable nanomaterial within the range of 25-50 wt%.

14. The degradable nanomaterial composition according to claim 12 or 13, wherein the composition has a filtration loss reduction rate greater than 40% for a fracturing fluid consisting of 0.65wt% of a thickener + 0.3wt% of a cross-linking agent + 0.05wt% of a gel breaker and having a filtration loss of 600 mL.

15. The degradable nanomaterial composition according to any one of claims 12-14, wherein the solvent is an organic alcohol, preferably liquid polyethylene glycol having a molecular weight of 380-430.

16. Use of the degradable nanomaterial according to any one of claims 1-5, the degradable nanomaterial prepared with the method according to any one of claims 6-11, or the degradable nanomaterial composition according to any one of claims 12-15 in an oil and natural gas reservoir reformation working fluid, preferably the use as a plugging agent of the fracturing fluid.

17. A fracturing fluid comprising the degradable nanomaterial composition according to any one of claims 12-15.

18. The fracturing fluid according to claim 17, wherein the degradable nanomaterial composition is contained in an amount of 0.1-1 wt%, based on the total amount of the fracturing fluid;

preferably, the fracturing fluid further comprises: 0.1-1.2 wt% of a thickener, 0-0.6 wt% of a cross-linking agent and 0.01-0.1% of a gel breaker, based on the total amount of the fracturing fluid; preferably, the thickener is an acrylamide homopolymer and/or a copolymer of acrylamide and other monomer, wherein the other monomer is at least one selected from the group consisting of acryloyloxy ethyl trimethyl ammonium chloride, sodium acrylate and acrylic acid; further preferably, the copolymer of acrylamide and another monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer;
preferably, the cross-linking agent is an organo-zirconium cross-linking agent and the gel breaker is a persulfate.

FIG. 1

FIG. 2

## INTERNATIONAL SEARCH REPORT

| International application No. |
|---|
| **PCT/CN2024/096725** |

### A. CLASSIFICATION OF SUBJECT MATTER

C09K 8/68(2006.01)i

According to International Patent Classification (IPC) or to both national classification and IPC

### B. FIELDS SEARCHED

Minimum documentation searched (classification system followed by classification symbols)

IPC/CPC: C09K 8/-

Documentation searched other than minimum documentation to the extent that such documents are included in the fields searched

Electronic data base consulted during the international search (name of data base and, where practicable, search terms used)

CNTXT, 中国期刊网全文数据库, CJFD, WPABS, DWPI, ENTXTC, ISI-Web of Science, STN: 降解, 微球, 交酯, 乳酸, 二酯, 环状酯, 粒径, D10, D50, D90, 氟, 羟基化, 活化, 表面活性剂, degradation, microsphere, lactide, fluorine, particle size, surfactant, 502-97-6, 95-96-5, 2795-39-3

### C. DOCUMENTS CONSIDERED TO BE RELEVANT

| Category* | Citation of document, with indication, where appropriate, of the relevant passages | Relevant to claim No. |
|---|---|---|
| X | US 2010307744 A1 (SCHLUMBERGER TECHNOLOGY CORP.) 09 December 2010 (2010-12-09)<br>description, paragraphs 0018-0054 | 1-2, 12-18 |
| A | US 2010307744 A1 (SCHLUMBERGER TECHNOLOGY CORP.) 09 December 2010 (2010-12-09)<br>description, paragraphs 0018-0054 | 3-11 |
| A | CN 101553552 A (PRAD RESEARCH AND DEVELOPMENT LTD) 07 October 2009 (2009-10-07)<br>entire description | 1-18 |
| A | CN 113528113 A (SNF (CHINA) FLOCCULANT CO., LTD.) 22 October 2021 (2021-10-22)<br>entire description | 1-18 |
| A | CN 117304911 A (CHINA PETROLEUM & CHEMICAL CORP. et al.) 29 December 2023 (2023-12-29)<br>entire description | 1-18 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2024** | **25 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/096725** |

### C.    DOCUMENTS CONSIDERED TO BE RELEVANT

| Category* | Citation of document, with indication, where appropriate, of the relevant passages | Relevant to claim No. |
|---|---|---|
| A | CN 117285920 A (CHINA PETROLEUM & CHEMICAL CORP. et al.) 26 December 2023 (2023-12-26)<br>entire description | 1-18 |
| A | CN 101511769 A (STEPAN COMPANY) 19 August 2009 (2009-08-19)<br>entire description | 1-18 |
| A | US 2016160108 A1 (HALLIBURTON ENERGY SERVICES, INC. et al.) 09 June 2016 (2016-06-09)<br>entire description | 1-18 |

Form PCT/ISA/210 (second sheet) (July 2022)

## INTERNATIONAL SEARCH REPORT
### Information on patent family members

International application No.

**PCT/CN2024/096725**

| Patent document cited in search report | | | Publication date (day/month/year) | Patent family member(s) | | | Publication date (day/month/year) |
|---|---|---|---|---|---|---|---|
| US | 2010307744 | A1 | 09 December 2010 | WO | 2010140033 | A2 | 09 December 2010 |
| | | | | WO | 2010140033 | A3 | 28 April 2011 |
| | | | | US | 8393395 | B2 | 12 March 2013 |
| CN | 101553552 | A | 07 October 2009 | None | | | |
| CN | 113528113 | A | 22 October 2021 | None | | | |
| CN | 117304911 | A | 29 December 2023 | None | | | |
| CN | 117285920 | A | 26 December 2023 | None | | | |
| CN | 101511769 | A | 19 August 2009 | None | | | |
| US | 2016160108 | A1 | 09 June 2016 | WO | 2015060813 | A1 | 30 April 2015 |
| | | | | MX | 2016003407 | A | 14 November 2016 |
| | | | | CA | 2923799 | A1 | 30 April 2015 |
| | | | | CA | 2923799 | C | 16 January 2018 |
| | | | | GB | 201604311 | D0 | 27 April 2016 |
| | | | | GB | 2532690 | A | 25 May 2016 |
| | | | | US | 9890317 | B2 | 13 February 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410153876

**Non-patent literature cited in the description**

- *CHEMICAL ABSTRACTS*, 502-97-6
- *CHEMICAL ABSTRACTS*, 95-96-5
- *CHEMICAL ABSTRACTS*, 87-56-8
- *CHEMICAL ABSTRACTS*, 2795-39-3